# FASCICULE DE BREVET EUROPEEN

(11) **EP 4 598 755 B1**
(45) Date de publication et mention de la délivrance du brevet: **02.12.2026**
(21) Numéro de dépôt: 23794085.3
(22) Date de dépôt: 04.10.2023
(51) Int. Cl.: B60C 1/00, C08L 7/00, C08L 9/00, B60C 15/04, B60C 11/00

(54) **PNEUMATIQUE**
LUFTREIFEN
TYRE

(30) Priorité: 04.10.2022 FR 2210158
(43) Date de publication de la demande: 13.08.2025
(73) Titulaire: COMPAGNIE GENERALE DES ETABLISSEMENTS MICHELIN, 63000 Clermont-Ferrand (FR)
(72) Inventeur: RIOU, Aline, 63040 CLERMONT-FERRAND CEDEX 9 (FR); AZOU, Gwenael, 63040 CLERMONT-FERRAND CEDEX 9 (FR)
(74) Mandataire: M.F.P. Michelin
(86) Numéro de dépôt international: PCT/FR2023/051537
(87) Numéro de publication internationale: WO 2024/074787

(56) Documents cités:
- EP-A1- 3 401 360
- US-A1- 2013 281 581

## Description

### DOMAINE DE L'INVENTION

La présente invention concerne un pneumatique, en particulier pour véhicules de tourisme.

### ARRIERE PLAN TECHNOLOGIQUE

Les pneumatiques pour véhicules de tourisme comportent habituellement :
- deux bourrelets destinés à entrer en contact avec un support de montage ;
- deux flancs prolongeant les bourrelets radialement vers l'extérieur et s'unissant dans un sommet comprenant une bande de roulement et une armature de sommet ;
- au moins une armature de carcasse s'étendant radialement dans chaque flanc et axialement dans le sommet, radialement intérieurement à l'armature de sommet.

Chaque bourrelet comprend des compositions de caoutchouc soumises à de fortes contraintes qui doivent présenter un fort niveau de rigidité toute en offrant une résistance au roulement réduite.

Cette problématique se retrouve également dans les pneumatiques comprenant une bande de roulement comprenant une couche radialement externe destinée à être en contact avec un sol de roulage du pneumatique lorsque le pneumatique est neuf et une couche radialement interne agencée radialement à l'intérieur de la couche radialement externe lorsque le pneumatique est neuf. En effet, dans certains pneumatiques, il est avantageux que la couche radialement interne présente un fort niveau de rigidité tout en offrant une résistance au roulement réduite.

La rigidification peut être obtenue au moyen de charges renforçantes et/ou en incorporant des résines renforçantes dans les compositions de caoutchouc.

Ces dernières années, limiter l'impact environnemental de la fabrication et de l'utilisation des pneumatiques est devenu un enjeu majeur pour les industriels du secteur. Les initiatives en recherche et développement pour produire des pneumatiques comprenant des compositions de caoutchouc à base de matières recyclées ou biosourcées se sont multipliées. La formulation de telles compositions n'est pas triviale, la difficulté majeure étant de concilier à la fois une bonne processabilité de la composition, un fort niveau de rigidité et une faible résistance au roulement de la composition à l'état cuit.

Ainsi, il demeure un besoin de fournir des compositions de caoutchouc réduisant l'empreinte environnementale des pneumatiques en incorporant des matières recyclées et/ou biosourcées et qui satisfassent un bon compromis rigidité/hystérèse/processabilité, ces compositions pouvant être tout particulièrement incorporées dans le ou les bourrelets d'un pneumatique ou les bandes de roulement.

### BREVE DESCRIPTION DE L'INVENTION

La présente invention porte sur un pneumatique comprenant deux bourrelets, au moins un des bourrelets comprenant une composition de caoutchouc à base de :
- une matrice élastomère comprenant majoritairement en masse du caoutchouc naturel ;
- au moins 65 pce de charges renforçantes, les charges renforçantes étant constituées de 40 à 70 pce de noir de carbone de pyrolyse et de 10 à 40 pce de noir de carbone, le ratio (masse de noir de carbone de pyrolyse)/(masse totale des charges renforçantes) allant de 0,60 à 0,75 ;
- 10 à 20 pce d'un mélange de résines renforçantes, le mélange de résines renforçantes comprenant une résine phénolique à base de cardanol, le ratio (masse de résine phénolique à base de cardanol)/(masse totale de de résines renforçantes) allant de 0,1 à 0,7, préférentiellement allant de 0,2 à 0,6, plus préférentiellement de 0,4 à 0,6 ;
- un durcisseur ; et
- un système de réticulation.

La présente invention porte également sur un pneumatique comprenant une bande de roulement comprenant :
- une couche radialement externe destinée à être en contact avec un sol de roulage du pneumatique lorsque le pneumatique est neuf, et
- une couche radialement interne agencée radialement à l'intérieur de la couche radialement externe lorsque le pneumatique est neuf,
la couche radialement interne comprenant une composition de caoutchouc à base de :
- une matrice élastomère comprenant majoritairement en masse du caoutchouc naturel ;
- au moins 65 pce de charges renforçantes, les charges renforçantes étant constituées de 40 à 70 pce de noir de carbone de pyrolyse et de 10 à 40 pce de noir de carbone, le ratio (masse de noir de carbone de pyrolyse)/(masse totale des charges renforçantes) allant de 0,60 à 0,75 ;
- 10 à 20 pce d'un mélange de résines renforçantes, le mélange de résines renforçantes comprenant une résine phénolique à base de cardanol, le ratio (masse de résine phénolique à base de cardanol)/(masse totale de de résines renforçantes) allant de 0,1 à 0,7, préférentiellement allant de 0,2 à 0,6, plus préférentiellement de 0,4 à 0,6 ;
- un durcisseur ; et
- un système de réticulation.

D'autres aspects de l'invention sont tels que décrits ci-après et dans les revendications.

### DEFINITIONS

Par l'expression "composition à base de", il faut entendre une composition comportant le mélange et/ou le produit de réaction *in situ* des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par l'expression "partie en poids pour cent parties en poids d'élastomère" (ou pce), il faut entendre, la partie, en masse pour cent parties en masse d'élastomère ou de caoutchouc, les deux termes étant synonymes.

Par « matrice élastomère » ou « matrice élastomérique », on entend l'ensemble du ou des élastomère(s) présent(s) dans la composition de caoutchouc.

Par « majoritairement » ou « à titre majoritaire », on entend au sens de la présente invention, que le composé est majoritaire parmi les composés du même type dans la composition, c'est-à-dire que c'est celui qui représente la plus grande quantité en masse parmi les composés du même type. En d'autres termes, la masse de ce composé représente au moins 51% de la masse totale des composés du même type dans la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse totale des élastomères, autrement dit la masse de cet élastomère représente au moins 51% de la masse totale des élastomères. De la même manière, une charge dite majoritaire est celle représentant la plus grande masse parmi les charges de la composition. En d'autres termes, la masse de cette charge représente au moins 51% de la masse totale des charges dans la composition.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on décrit un intervalle de valeurs par l'expression "de a à b", on décrit également et préférentiellement l'intervalle représenté par l'expression "entre a et b".

L'expression « radial » se réfère à un rayon du pneumatique. C'est dans ce sens qu'on dit d'un point P1 qu'il est « radialement intérieur » à un point P2 (ou « radialement à l'intérieur » du point P2) s'il est plus près de l'axe de rotation du pneumatique que le point P2. Inversement, un point P3 est dit « radialement extérieur à » un point P4 (ou « radialement à l'extérieur » du point P4) s'il est plus éloigné de l'axe de rotation du pneumatique que le point P4. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également. Par « coupe radiale » ou « section radiale » on entend ici une coupe ou une section selon un plan qui contient l'axe de rotation du pneumatique.

Une direction « axiale » est une direction parallèle à l'axe de rotation du pneumatique. Un point P5 est dit « axialement intérieur » à un point P6 (ou « axialement à l'intérieur » du point P6) s'il est plus près du plan médian du pneumatique que le point P6. Inversement, un point P7 est dit « axialement extérieur à » un point P8 (ou « axialement à l'extérieur » du point P8) s'il est plus éloigné du plan médian du pneumatique que le point P8. Le « plan médian » du pneumatique est le plan qui est perpendiculaire à l'axe de rotation du pneumatique et qui se situe à équidistance des structures annulaires de renforcement de chaque bourrelet.

Une direction « circonférentielle » est la direction qui, dans chaque plan de coupe méridien, est perpendiculaire à la fois à un rayon du pneumatique et à la direction axiale. Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### DESCRIPTION DETAILLEE DE L'INVENTION

Les inventeurs ont mis au point des compositions de caoutchouc répondant aux besoins exprimés. Les compositions présentent une bonne processabilité et permettent d'atteindre un compromis rigidité/résistance au roulement satisfaisant.

La présente invention porte ainsi sur un pneumatique (10) comprenant dans les bourrelets ou dans la bande de roulement une composition de caoutchouc telle que décrite ci-dessous.

Plus précisément, la présente invention porte sur un pneumatique comprenant deux bourrelets, au moins un des bourrelets comprenant une composition de caoutchouc à base de :
- une matrice élastomère comprenant majoritairement en masse du caoutchouc naturel ;
- au moins 65 pce de charges renforçantes, les charges renforçantes étant constituées de 40 à 70 pce de noir de carbone de pyrolyse et de 10 à 40 pce de noir de carbone, le ratio (masse de noir de carbone de pyrolyse)/(masse totale des charges renforçantes) allant de 0,60 à 0,75 ;
- 10 à 20 pce d'un mélange de résines renforçantes, le mélange de résines renforçantes comprenant une résine phénolique à base de cardanol, le ratio (masse de résine phénolique à base de cardanol)/(masse totale de de résines renforçantes) allant de 0,1 à 0,7, préférentiellement allant de 0,2 à 0,6, plus préférentiellement de 0,4 à 0,6 ;
- un durcisseur ; et
- un système de réticulation.

La présente invention porte également sur un pneumatique comprenant une bande de roulement comprenant :
- une couche radialement externe destinée à être en contact avec un sol de roulage du pneumatique lorsque le pneumatique est neuf, et
- une couche radialement interne agencée radialement à l'intérieur de la couche radialement externe lorsque le pneumatique est neuf,
la couche radialement interne comprenant une composition de caoutchouc à base de :
- une matrice élastomère comprenant majoritairement en masse du caoutchouc naturel ;
- au moins 65 pce de charges renforçantes, les charges renforçantes étant constituées de 40 à 70 pce de noir de carbone de pyrolyse et de 10 à 40 pce de noir de carbone, le ratio (masse de noir de carbone de pyrolyse)/(masse totale des charges renforçantes) allant de 0,60 à 0,75 ;
- 10 à 20 pce d'un mélange de résines renforçantes, le mélange de résines renforçantes comprenant une résine phénolique à base de cardanol, le ratio (masse de résine phénolique à base de cardanol)/(masse totale de de résines renforçantes) allant de 0,1 à 0,7, préférentiellement allant de 0,2 à 0,6, plus préférentiellement de 0,4 à 0,6;
- un durcisseur ; et
- un système de réticulation.

La composition de caoutchouc peut en outre comprendre des additifs et agents de mise en œuvre usuels.

Les différents constituants de la composition de caoutchouc peuvent être tels que décrits ci-dessous.

### Matrice élastomère

La matrice élastomère comprend majoritairement en masse du caoutchouc naturel, typiquement plus de 50 pce à 100 pce, de préférence de 75 à 100 pce, de caoutchouc naturel.

La matrice élastomère peut comprend un autre élastomère choisi dans le groupe constitué par les élastomères diéniques et les mélanges de ces derniers.

Par élastomère « diénique », qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non).

Ces élastomères diéniques peuvent être classés dans deux catégories: "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%).

On entend particulièrement par élastomère diénique susceptible d'être utilisé :
(a) - tout homopolymère obtenu par polymérisation d'un monomère diène, conjugué ou non, ayant de 4 à 18 atomes de carbone :
(b) - tout copolymère obtenu par copolymérisation d'un diène, conjugué ou non, ayant de 4 à 18 atomes de carbone et d'au moins un autre monomère.

L'autre monomère peut être l'éthylène, une oléfine ou un diène, conjugué ou non.

A titre de diènes conjugués conviennent les diènes conjugués ayant de 4 à 12 atomes de carbone, en particulier les 1,3-diènes, tels que notamment le 1,3-butadiène et l'isoprène.

A titre d'oléfines conviennent les composés vinylaromatiques ayant de 8 à 20 atomes de carbone et les α-monooléfines aliphatiques ayant de 3 à 12 atomes de carbone.

A titre de composés vinylaromatiques conviennent par exemple le styrène, l'ortho-, méta-, para-méthylstyrène, le mélange commercial "vinyle-toluène", le para-tertiobutylstyrène. A titre d'α-monooléfines aliphatiques conviennent notamment les α-monooléfines aliphatiques acycliques ayant de 3 à 18 atomes de carbone.

Plus particulièrement, l'élastomère diénique susceptible d'être utilisé dans les compositions peut être :
(a') - tout homopolymère obtenu par polymérisation d'un monomère diène conjugué ayant de 4 à 12 atomes de carbone ;
(b') - tout copolymère obtenu par copolymérisation d'un ou plusieurs diènes conjugués entre eux ou avec un ou plusieurs composés vinylaromatiques ayant de 8 à 20 atomes de carbone;
(c') - tout copolymère obtenu par copolymérisation d'un ou plusieurs diènes, conjugués ou non, avec l'éthylène, une α-monooléfine ou leur mélange, comme par exemple les élastomères obtenus à partir d'éthylène, de propylène avec un monomère diène non conjugué du type précité.

Préférentiellement, l'élastomère diénique est choisi dans le groupe constitué par les polybutadiènes (BR), le caoutchouc naturel (NR), les polyisoprènes de synthèse (IR), les copolymères de butadiène, les copolymères d'isoprène, et les mélanges de ces élastomères. Les copolymères de butadiène sont particulièrement choisis dans le groupe constitué par les copolymères de butadiène-styrène (SBR).

L'élastomère diénique peut être modifié, c'est à dire soit couplé et/ou étoilé, soit fonctionnalisé, soit couplé et/ou étoilé et simultanément fonctionnalisé.

Ainsi, l'élastomère diénique peut être couplé et/ou étoilé, par exemple au moyen d'un atome silicium ou d'étain qui lie entre elles les chaînes élastomères.

L'élastomère diénique peut être simultanément ou alternativement fonctionnalisé et comprendre au moins groupe fonctionnel. Par groupe fonctionnel, on entend un groupe comprenant au moins un hétéroatome choisi parmi Si, N, S, O, P. Conviennent particulièrement à titre de groupes fonctionnels ceux comprenant au moins une fonction telle que : le silanol, un alcoxysilane, une amine primaire, secondaire ou tertiaire, cyclique ou non, un thiol, un époxyde.

Dans certains modes de réalisation, la composition de caoutchouc utile dans le cadre de l'invention comprend en outre un copolymère de butadiène-styrène (SBR).

Dans certains modes de réalisation, la composition de caoutchouc utile dans le cadre de l'invention comprend une matrice élastomère constituée de caoutchouc naturel et d'un copolymère de butadiène-styrène (SBR), le caoutchouc naturel étant majoritaire en masse dans la matrice élastomère.

Dans certains modes de réalisation, la composition de caoutchouc utile dans le cadre de l'invention comprend une matrice élastomère constituée de caoutchouc naturel (100 pce de caoutchouc naturel).

### Charge renforçante

La composition de caoutchouc utile dans le cadre de la présente invention comprend au moins 65 pce, typiquement de 65 à 110 pce, de charges renforçantes, les charges renforçantes étant constituées de 40 à 70 pce de noir de carbone de pyrolyse et de 10 à 40 pce de noir de carbone (dit « conventionnel »), le ratio (masse du noir de carbone de pyrolyse)/(masse totale des charges renforçantes) allant de 0,60 à 0,75.

Dans certains modes de réalisation, les charges renforçantes sont constituées de 10 à 30 pce, de préférence 20 à 30 pce de noirs de carbone (dit « conventionnel ») et de 40 à 65 pce, de préférence de 45 à 65 pce de noirs de carbone de pyrolyse.

### Noir de carbone de pyrolyse

Par « noir de carbone de pyrolyse», on entend au sens de la présente invention un noir de carbone issu d'un procédé de pyrolyse d'un matériau comprenant au moins un polymère carboné et un noir de carbone, ci-après le matériau à pyrolyser, par exemple dans le cadre du recyclage d'un tel matériau. L'état physique sous lequel se présente le matériau à pyrolyser est indifférent, que ce soit sous forme de poudre, granulé, bande, ou toute autre forme, à l'état réticulé ou non réticulé.

Préférentiellement, le matériau à pyrolyser peut être récupéré à partir d'articles manufacturés ou de produits générés durant leur fabrication/production (tels que des sous-produits ou des chutes) ; ces articles manufacturés pouvant être choisis dans le groupe constitué par les bandages pneumatiques, les bandages non pneumatiques, les bandes transporteuses industrielles, les courroies de transmissions, les joints en caoutchouc, les tuyaux en caoutchouc, les semelles de chaussure et les essuie-glaces. Plus préférentiellement encore, le noir de carbone de pyrolyse utilisable dans le cadre de la présente invention est un noir de carbone obtenu à partir d'un procédé de pyrolyse dont le matériau à pyrolyser est issu d'articles manufacturés choisis dans le groupe constitué par les bandages pneumatiques et les bandages non pneumatiques.

La pyrolyse dans le cadre de la présente invention signifie tout type de décomposition thermique en l'absence d'oxygène et dont la matière première est le matériau à pyrolyser tel que défini ci-dessus. Les noirs de carbone de pyrolyse se distinguent donc des noirs de carbone dits industriels et/ou de grade ASTM en ce que la matière première carbonée utilisée pour la pyrolyse est un matériau comprenant au moins un polymère carboné et un noir de carbone et non des matériaux issus de coupes pétrolières ou issues du charbon ou encore d'huiles d'origine naturelle.

Les noirs de carbone de pyrolyse utilisables dans la cadre de la présente invention se distinguent des noirs de carbone connus tels que les noirs de carbone industriels, en particulier les noirs de carbone dit « furnace », notamment par une teneur en cendres plus élevée.

Préférentiellement, le noir de carbone de pyrolyse utilisable dans le cadre de la présente invention présente une teneur en cendres allant de 5 à 30% en poids, plus préférentiellement allant de 8 à 25% en poids, plus préférentiellement encore allant de 10% à 22% en poids, par rapport au poids total du noir de carbone de pyrolyse. Préférentiellement, le noir de carbone de pyrolyse utilisable dans le cadre de la présente invention a une teneur en soufre supérieure à 2% en poids, de préférence allant de 2,5 à 5% en poids, par rapport au poids total du noir de carbone de pyrolyse. Préférentiellement, le noir de carbone de pyrolyse utilisable dans le cadre de la présente invention a une teneur en zinc supérieure ou égale à 2% en poids, de préférence allant de 2,5 à 8% en poids, par rapport au poids total du noir de carbone de pyrolyse. Préférentiellement, le noir de carbone de pyrolyse utilisable dans le cadre de la présente invention présente une surface spécifique STSA mesurée selon la norme ASTM D 6556-2021 comprise dans un domaine allant de 20 à 200 m²/g, plus préférentiellement allant de 30 à 90 m²/g.

Préférentiellement, le noir de carbone de pyrolyse utilisable dans le cadre de la présente invention présente un volume vide mesurée selon la norme ASTM D7854 (2018) et à une pression de 50 MPa compris dans un domaine allant de 30à 60 ml/100g, plus préférentiellement allant de 35 à 55 ml/100g.

La teneur en cendres est déterminée par calcination dans des capsules en platine dans un four à moufle à 825°C selon le protocole suivant. Une capsule est préalablement identifiée avant chaque série de mesure et est tarée à 0,1 mg près et la masse est notée P0. Dans la capsule, on introduit 5 g d'échantillon de noir de carbone de pyrolyse que l'on pèse précisément à 0,1 mg près ; cette masse est notée P1. La capsule et son contenu sont pré-calcinés à l'aide d'un bec bunsen jusqu'à apparition des fumées et inflammation du produit. Une fois la combustion complète du produit, la capsule et son contenu sont introduits dans un four à moufle chauffé à 825 C pendant 1 h. Au bout d'1 h, la capsule est sortie du four et immédiatement introduite dans un dessiccateur à température ambiante. Lorsque la capsule et les cendres sont revenues à température ambiante, la capsule est de nouveau pesée pour obtenir la masse P2. Finalement, il est possible d'obtenir le taux de cendres (% cendres) en utilisant la formule ci-dessous : $% cendres = \frac{P 2 - P 0}{P 1 - P 0} \times 100$

La teneur en zinc dans le noir de carbone de pyrolyse est réalisée après calcination de l'échantillon, puis reprise des cendres dans un milieu acide et dosage par ICP-AES (spectroscopie d'émission atomique à plasma à couplage inductif). Les cendres sont obtenues en réalisant le protocole ci-dessus. On prélève environ exactement 100 mg de cendres (prise d'essai) que l'on introduit dans un tube en PFA (perfluoroalkoxy) pour plaque chauffante HotBlock. On ajoute ensuite 8 mL d'acide chlorhydrique concentré à 37%, 3 mL d'acide nitrique concentré à 65% et 0,5 mL d'acide fluorhydrique à 40%. On ferme le tube avec son bouchon et on chauffe à 130 C pendant 2 h. Après refroidissement, le contenu est ensuite transvasé à l'aide d'eau ultrapure dans une fiole jaugée en PTFE (polytétrafluoroéthylène) de 100 mL contenant déjà 2 g d'acide borique (pour neutraliser l'acide fluorhydrique). On complète avec de l'eau ultrapure jusqu'au trait de jauge. La solution obtenue est diluée par 100, en prélevant 1 mL dans une fiole de 100 mL en PFTE, contenant préalablement 8 mL d'acide chlorhydrique concentré à 37%, 3 mL d'acide nitrique concentré à 65%, 0,5 mL d'acide fluorhydrique à 40% et 2 g d'acide borique. Cette solution diluée est ensuite filtrée sur filtre seringue 0,45 µm GHP avant d'être analysée par spectrométrie d'émission atomique - plasma à couplage inductif (ICP-AES). En amont de l'analyse de la solution diluée, au moins 5 étalons sont analysés par ICP-AES à des concentrations en zinc de 0, 0,5, 1, 2 et 5 mg/L. Ces étalons ont été préparés dans des fioles jaugées de 100 mL, par dilution d'une solution commerciale certifiée à une concentration en zinc de 1 g/L.

Ces fioles jaugées contiennent au préalable 8 mL d'acide chlorhydrique concentré à 37%, 3 mL d'acide nitrique concentré à 65%, 0,5 mL d'acide fluorhydrique à 40% et 2 g d'acide borique. Les solutions étalons sont analysées par ICP-AES à une longueur d'onde de λZn = 202,613 nm. Pour chaque concentration (c) étalon, l'intensité du signal du zinc IZn est reportée sur un graphique IZn = f(c), qui correspond à la droite de calibration (de type y = ax + b). La solution de l'échantillon (solution diluée) de concentration inconnue est ensuite mesurée dans les mêmes conditions que les étalons. L'intensité mesurée est reliée à la concentration grâce à la droite de calibration obtenue précédemment. On obtient ainsi la concentration [c]cendres en % massique directement par le logiciel, car la prise d'essai et le volume ont été préalablement enregistrés. La concentration en zinc dans le noir de pyrolyse [c]noir en % massique est obtenue par l'équation suivante : ${\left[c\right]}_{noir} = {\left[c\right]}_{cendres} ∗ 100 ∗ % cendres$

La détermination du taux de soufre dans les noirs de carbone de pyrolyse est réalisée par four LECO. Les analyseurs de soufre LECO sont conçus pour mesurer, notamment, la teneur en soufre dans des matériaux organiques et/ou inorganiques par combustion et détection infrarouge non dispersive. Avant la réalisation de la mesure du taux de soufre sur l'échantillon, un nettoyage des nacelles et un étalonnage du four sont réalisés. Les nacelles pour four LECO sont préalablement nettoyées : il s'agit d'analyser la nacelle vide, dans les mêmes conditions que les échantillons. La préparation de la courbe de calibration se fait à partir d'un standard commercial appelé « BBOT » dont la pureté est supérieure à 99,99% et dont la teneur en carbone (C), en hydrogène (H), en azote (N), en oxygène (O) et en soufre (S) est garantie. Cette teneur est la suivante C% : 72,52 ; H% 6,09 ; N% 6,51 ; O% 7,43 et S% 7,44. On pèse environ exactement 10 ± 3, 20 ± 3 et 40 ± 3 mg de BBOT dans une nacelle. L'ensemble étalon / nacelle est introduit dans le four à combustion, régulé à 1350°C sous oxygène pur. La combinaison de la température du four et du débit d'analyse provoque la combustion de l'échantillon et la libération du soufre et/ou du carbone sous forme de SO₂(g). Après un temps de 20 s, l'oxygène commence à circuler à travers la « lance » pour accélérer la combustion des matériaux difficiles à brûler. Le soufre et/ou le carbone, sous forme de SO₂(g), sont entraînés par un flux d'oxygène jusqu'à travers les cellules infrarouges de détection. Le logiciel de l'instrument trace une droite reliant la masse d'étalon introduite et la réponse observée (aire) sur le détecteur. On obtient ainsi une droite de calibration. Après avoir nettoyer soigneusement le matériel de prélèvement, on pèse environ exactement 80 ± 5 mg de noir de carbone de pyrolyse que l'on introduit dans une nacelle pour four LECO. L'aire du pic de SO₂ observée est reliée à la concentration grâce à la droite de calibration. Le logiciel de l'instrument calcule ensuite grâce à la masse d'échantillon introduit dans la nacelle le % massique de soufre dans l'échantillon.

Des noirs de carbone de pyrolyse sont commercialisés par exemple par la société BlackBear sous la référence « BBCT30 » ou par la société Scandinavian Enviro Systems sous la référence « P550 ».

Dans certains modes de réalisation, la composition de caoutchouc comprend de 40 à 65 pce, de préférence de 45 à 65 pce de noirs de carbone de pyrolyse.

### Noir de carbone

Comme noirs de carbone conviennent tous les noirs de carbone, notamment les noirs conventionnellement utilisés dans les pneumatiques ou leurs bandes de roulement, en particulier les noirs de carbone industriels, plus spécifiquement les noirs de carbone dits « furnace ».

Parmi les noirs de carbone, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772. De préférence, les noirs de carbone sont sélectionnés dans le groupe constitué par les noirs de série 300, 500, 600 et 700.

Les noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO 97/36724-A2 ou WO 99/16600-A1). Dans certains modes de réalisation, la composition de caoutchouc comprend de 10 à 30 pce, ou de 20 à 30 pce de noirs de carbone « conventionnel », par exemple de noirs de carbone ASTM N326 ou de noirs N550.

### Résines renforçantes

La composition utile dans le cadre de la présente invention comprend de 10 à 20 pce d'un mélange de résines renforçantes, le mélange de résines renforçantes comprenant une résine phénolique à base de cardanol, le ratio (masse de résine phénolique à base de cardanol)/(masse totale de de résines renforçantes) allant de 0,1 à 0,7, préférentiellement allant de 0,2 à 0,6, plus préférentiellement de 0,4 à 0,6.

### Résines phénoliques à base de cardanol

Les résines phénoliques à base de cardanol sont des résines phénoliques obtenues par réaction entre le cardanol et un donneur de méthylène. Les composés dit « donneurs de méthylène » sont bien connus de l'homme du métier. Le donneur de méthylène peut par exemple être un formaldéhyde.

Le cardanol est un lipide phénolique obtenu en particulier à partir de l'acide anacardique, le principal composant du baume de cajou, entourant la noix de cajou.

Un exemple de résine phénolique à base de cardanol est la résine Durez 12686 commercialisée par Sumitomo.

### Autres résines renforçantes

Le mélange de résines renforçantes comprend au moins une autre résine renforçante, typiquement choisie parmi les résines phénoliques, les résines époxydes, les résines benzoxazines, les résines polyuréthanes, les résines aminoplastes, etc.

Les résines renforçantes classiquement utilisées dans les compositions de caoutchouc pour pneumatiques sont à base d'un système accepteur/donneur de méthylène. Les termes "accepteur de méthylène" et "donneur de méthylène" sont bien connus de l'homme du métier et largement utilisés pour designer des composés aptes à réagir ensemble (réticulation). La réticulation de la résine est provoquée lors de la cuisson de la matrice de caoutchouc, par formation de ponts méthylènes (-CH2-) entre les carbones en positions ortho et/ou para des noyaux phénoliques de la résine et le donneur de méthylène et créant ainsi un réseau de résine tridimensionnel qui vient se superposer et s'interpénétrer avec le réseau charge renforçante/élastomère d'une part et, avec le réseau élastomère/soufre d'autre part (si l'agent de réticulation est le soufre). Des exemples de tels accepteur et donneur de méthylène sont décrits dans WO 02/10269.

Il existe de nombreuses autres résines renforçantes utilisables dans le cadre de la présente invention. A titre d'exemple on peut citer notamment celles décrites dans les demandes WO 2011/029938, WO 2008/080535, WO 2014/016346, WO 2013/017422 ou WO 2014/016344.

De préférence, le mélange de résines renforçantes comprend une résine phénolique choisie dans le groupe constitué par les résines à base de polyphénol, d'alkylphénol, d'aralkylphénol et leurs mélanges. De préférence la résine renforçante est une résine phénolique choisie dans le groupe constitué par les résines à base d'hydroxybenzène, de bisphénol (de préférence le diphénylolpropane ou le diphénylolméthane), de naphtol, de crésol, de t-butylphénol, d'octylphénol, de nonylphénol, de résorcinol, de phloroglucinol, de xylénol (notamment le 3,5-xylénol), de 1-naphtol, de 2-naphtol, de 1,5-naphtalène diol, de 2,7-naphtalène diol, de pyrogallol, de 2-méthyl hydroquinone, de 4-méthyl-catéchol, de 2-méthyl-catéchol, d'orcinol (5-méthylbenzene-1,3-diol), d'hydroquinone (benzène-1,4-diol) et de leurs mélanges.

La résine renforçante peut également être une résine époxyde choisie dans le groupe constitué par les composés époxydes aromatiques, les composés époxydes alicycliques, les composés époxydes aliphatiques et leurs mélanges, de préférence la résine renforçante est une résine époxyde choisie dans le groupe constitué par le 2,2 bis[4-(glycidyloxy) phényl] propane, le poly[o-crésylglycidyl éther)-co-formaldéhyde], le poly[phénylglycidyl éther)-co-formaldéhyde], poly[(phenylglycidyl éther)-co(hydroxybenzaldehyde glycidyl éther)] et leurs mélanges.

Les résines renforçantes au sens de la présente invention ne doivent pas être confondues avec les résines hydrocarbonées dites plastifiantes, qui sont par nature au moins partiellement miscibles (i.e., compatibles) aux taux utilisés avec les compositions de polymères auxquelles elles sont destinées, de manière à agir comme de véritables agents diluants. Des résines hydrocarbonées plastifiantes ont notamment été décrites par exemple dans la demande WO 2013/092096 ou dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "Rubber Tires and Mechanical Goods"). Elles peuvent être aliphatiques, cycloaliphatiques, aromatiques, aromatiques hydrogénées, du type aliphatique/aromatique.

La composition utile dans le cadre de la présente invention comprend en outre un co-agent de la résine renforçante (parfois appelé durcisseur) bien connu de l'homme du métier. L'homme du métier sait quel co-agent associer à quelle résine renforçante en se basant sur ses connaissances générales ou sur les documents précités. Il comprend que le co-agent de la résine renforçante est au moins bifonctionnel pour pouvoir former avec la résine renforçante un réseau de résine tridimensionnel.

Le co-agent de la résine renforçante peut être choisi dans le groupe constitué par les donneurs de méthylène, les polyaldéhydes, les polyamines, les polyimines, les polyamines, les polyaldimines, les polykétimines, les anhydrides d'acide et leurs mélanges.

Lorsque la résine renforçante utilisée est une résine phénolique, le co-agent de la résine renforçante est de préférence un donneur de méthylène choisi dans le groupe constitué par l'hexaméthylènetétramine, l'hexaméthoxyméthylmélamine, l'hexaéthoxyméthylmélamine, les polymères de paraformaldéhyde, les dérivés N-méthylol de la mélamine, et leurs mélanges, de préférence dans le groupe constitué par l'hexaméthylènetétramine, l'hexaméthoxyméthylmélamine, l'hexaéthoxyméthylmélamine et leurs mélanges.

Lorsque la résine renforçante utilisée est une résine époxyde, le co-agent de la résine renforçante est de préférence un durcisseur aminé choisi dans le groupe constitué par les polyamines (notamment les polyamines aliphatiques, les polyamines alicycliques, les amines aliphatiques et les polyamines aromatiques), les dicyandiamides, les polyhydrazides, les composés imidazole, les sels de sulfonium, les sels d'onium, les ketimines, les anhydrides d'acides et leurs mélanges, de préférence le co-agent de la résine renforçante est un durcisseur aminé choisi dans le groupe constitué par l'éthylènediamine, le diéthylènetriamine, le triéthylènetétramine, le 1,8-diaminooctane, le 1,3 bis(aminométhyl)cyclohexane, que le m-xylylènediamine, le p-xylylènediamine, le m-phénylènediamine, 2,2-bis(4-aminophényl)propane, diaminodiphénylméthane, le 3,5-diéthyl-2,4 diamine toluène, le 3,5-diéthyl-2,6-diamine toluène, le méthyl-diamine thiotoluène, le diméthyl-diamine thiotoluène, diaminodiphénylsulfone, 2,2-bis(4-aminophényl)-p-diisopropylbenzène, le 3,3'-diaminobenzidine, le polyanhydride le 4,4'-(4,4'-isopropylidènediphénoxy)bis(phtalic anhydride), le pyromellitic dianhydride et leurs mélanges.

Le ratio massique durcisseur/ mélange de résines renforçantes varie typiquement de 0,2 à 0,5.

Dans certains modes de réalisation, la composition utile dans le cadre de la présente invention comprend de 10 à 20 pce d'un mélange de résines renforçantes, le mélange de résines renforçantes comprenant, ou consistant en, une résine phénolique à base de cardanol et au moins une autre résine renforçante choisie parmi les résines phénoliques, les résines époxydes, les résines benzoxazines, les résines polyuréthanes et les résines aminoplastes.

Dans certains modes de réalisation, la composition utile dans le cadre de la présente invention comprend de 10 à 20 pce d'un mélange de résines renforçantes, le mélange de résines renforçantes étant constitué d'une résine phénolique à base de cardanol et d'une autre résine phénolique, de préférence une autre résine phénolique à base d'hydroxybenzène.

Dans ces modes de réalisation, le ratio (masse de résine phénolique à base de cardanol)/(masse totale de de résines renforçantes) va de 0,1 à 0,7, préférentiellement de 0,2 à 0,6, plus préférentiellement encore de 0,4 à 0,6.

### Système de réticulation

La composition utile dans le cadre de l'invention comprend un système de réticulation. Le système de réticulation peut être tout type de système connu de l'homme de l'art dans le domaine des compositions de caoutchouc pour pneumatique. Il peut notamment être à base de soufre, et/ou de peroxyde et/ou de bismaléimides.

De manière préférentielle, le système de réticulation est à base de soufre, on parle alors d'un système de vulcanisation. Le soufre peut être apporté sous toute forme, notamment sous forme de soufre moléculaire, et/ou d'un agent donneur de soufre. Au moins un accélérateur de vulcanisation est également préférentiellement présent, et, de manière optionnelle, préférentielle également, on peut utiliser divers activateurs de vulcanisation connus tels qu'oxyde de zinc, acide stéarique ou composé équivalent tels que les sels d'acide stéarique et sels de métaux de transition, dérivés guanidiques (en particulier diphénylguanidine), ou encore des retardateurs de vulcanisation connus.

Le soufre est utilisé à un taux préférentiel compris entre 0,5 et 12 pce, en particulier entre 1 et 10 pce, de manière préférée entre 3 et 9 pce.

L'accélérateur de vulcanisation est utilisé à un taux préférentiel compris entre 0,1 et 10 pce, plus préférentiellement compris entre 0,8 et 2 pce.

L'activateur de vulcanisation est utilisé à un taux préférentiel compris entre 1 et 10 pce, plus préférentiellement compris entre 3,3 et 10 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

### Additifs et agents de mise en œuvre usuels

La composition utile dans le cadre de l'invention peut également comprendre tout ou partie des additifs et agents de mise en oeuvre usuels, connus de l'homme de l'art et habituellement utilisés dans les compositions de caoutchouc pour pneumatiques, comme par exemple des plastifiants (tels que des huiles plastifiantes et/ou des résines plastifiantes ayant ou non un caractère tackifiant), des charges non renforçantes, des pigments, des sels métalliques pro-oxydants, des agents de protection tels que cires anti-ozone, anti-ozonants chimiques, anti-oxydants et des agents anti-fatigues.

### Fabrication des compositions

La composition utile dans le cadre de l'invention est fabriquée dans des mélangeurs appropriés, en utilisant deux phases de préparation successives bien connues de l'homme du métier :
- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomérique, les charges, les éventuels autres additifs divers, à l'exception du système de réticulation. L'incorporation de la charge à l'élastomère peut être réalisée en une ou plusieurs fois en malaxant thermomécaniquement. Dans le cas où la charge est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers autres que le système de réticulation.

La phase non-productive est réalisée à haute température, jusqu'à une température maximale comprise entre 130°C et 170°C, pendant une durée généralement comprise entre 2 et 10 minutes.
- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 110°C, par exemple entre 40°C et 100°C. On incorpore alors le système de réticulation, et le tout est alors mélangé pendant quelques minutes, par exemple entre 1 et 30 min.

La composition finale ainsi obtenue est ensuite calandrée par exemple sous la forme d'une feuille ou d'une plaque, notamment pour une caractérisation au laboratoire, ou encore extrudée sous la forme d'un semi-fini (ou profilé) de caoutchouc utilisable par exemple comme couche interne dans un pneumatique.

La composition peut être soit à l'état cru (avant réticulation ou vulcanisation), soit à l'état cuit (après réticulation ou vulcanisation), peut être un produit semi-fini qui peut être utilisé dans un pneumatique.

La réticulation de la composition peut être conduite de manière connue de l'homme du métier, par exemple à une température comprise entre 130°C et 200°C, de préférence sous pression, pendant un temps suffisant qui peut varier par exemple entre 5 et 90 min.

### PNEUMATIQUES

Les compositions décrites précédemment sont, conformément à un premier mode de réalisation de l'invention, particulièrement utiles pour une inclusion dans au moins un des bourrelets du pneumatique et de préférence dans les deux bourrelets du pneumatique.

Le bourrelet d'un pneumatique, désigné en anglais par « Bead Zone » est une des trois grandes zones d'un pneumatique (sommet, flanc, et bourrelet).

Plus précisément, le bourrelet est la portion du pneumatique destiné à permettre l'accrochage du pneumatique sur un support de montage, par exemple une roue comprenant une jante. Ainsi, chaque bourrelet est notamment destiné à être au contact d'un crochet de la jante permettant son accrochage. Ainsi, le bourrelet peut être radialement délimité à l'intérieur par le point radialement le plus intérieur du pneumatique et délimité radialement à l'extérieur par le point de la surface externe du bourrelet du pneumatique radialement le plus extérieur à être en contact avec une jante de mesure du pneumatique selon le manuel de la norme ETRTO (en anglais, « European Tyre and Rim Technical Organisation »), 2021 lorsque le pneumatique est gonflé à sa pression nominale sur cette jante de mesure.

De façon avantageuse, les compositions sont des compositions qui ne sont pas destinées à être au contact d'un support de montage du pneumatique de sorte que le pneumatique comprenant :
- une armature de carcasse comprenant au moins une couche de carcasse ancrée dans chaque bourrelet, et
- une couche d'assise du pneumatique destinée à être au contact d'un support de montage du pneumatique lorsque le pneumatique est monté sur le support de montage, le ou chaque bourrelet comprend au moins une couche intermédiaire agencée axialement entre la couche de carcasse ancrée dans ledit bourrelet et la couche d'assise, la couche intermédiaire comprenant la composition de caoutchouc, de préférence étant constituée de la composition de caoutchouc décrite précédemment.

Dans une première variante de ces premiers modes de réalisation, la couche de carcasse ancrée dans chaque bourrelet forme un enroulement autour d'un élément de renforcement circonférentiel de chaque bourrelet de sorte qu'une portion axialement intérieure de la couche de carcasse ancrée dans chaque bourrelet est agencée axialement à l'intérieur d'une portion axialement extérieure de la couche de carcasse ancrée dans chaque bourrelet, la couche intermédiaire comprend une couche, dite de bourrage, s'étendant radialement vers l'extérieur depuis chaque élément de renforcement circonférentiel et agencée au moins en partie, entre la portion axialement intérieure et la portion axialement extérieure.

Dans une deuxième variante de ces premiers modes de réalisation, chaque bourrelet comprend un élément de renforcement circonférentiel axialement intérieur agencé axialement à l'intérieur de la couche de carcasse ancrée dans chaque bourrelet et un élément de renforcement circonférentiel axialement extérieur agencé axialement à l'extérieur de la couche de carcasse ancrée dans chaque bourrelet, la couche intermédiaire comprend une couche, dite de bourrage, s'étendant axialement entre la couche d'assise et l'élément de renforcement axialement extérieur.

Quel que soit le mode de réalisation décrit précédemment, la couche d'assise est agencée axialement à l'extérieur de ou de chaque élément de renforcement circonférentiel. La couche d'assise est donc agencée axialement entre le ou chaque élément de renforcement circonférentiel et le support de montage lorsque le pneumatique est monté sur ce support.

De façon classique, le support de montage est une jante.

Les compositions décrites précédemment sont, conformément à un deuxième mode de réalisation de l'invention, particulièrement utiles pour une inclusion dans la bande de roulement comprenant :
- une couche radialement externe destinée à être en contact avec un sol de roulage du pneumatique lorsque le pneumatique est neuf, et
- une couche radialement interne agencée radialement à l'intérieur de la couche radialement externe lorsque le pneumatique est neuf, la couche radialement interne comprenant la composition de caoutchouc.

Dans une première variante de ces deuxièmes modes de réalisation, le pneumatique comprenant un indicateur d'usure réglementaire délimitant un seuil d'usure réglementaire de la bande de roulement, il existe un seuil prédéterminé d'usure de la bande de roulement strictement inférieur au seuil d'usure réglementaire, seuil prédéterminé au-delà duquel la couche radialement interne est destinée à être en contact avec le sol du roulage du pneumatique.

Dans ce mode de réalisation, la couche radialement interne peut venir en contact avec le sol de roulage lorsque l'usure du pneumatique est comprise entre le seuil prédéterminé et le seuil d'usure réglementaire.

Dans une deuxième variante de ces deuxièmes modes de réalisation, le pneumatique comprenant un indicateur d'usure réglementaire délimitant un seuil d'usure réglementaire de la bande de roulement, la couche radialement interne est destinée à ne pas être en contact avec le sol du roulage du pneumatique tant que l'usure de la bande de roulement est inférieure ou égale au seuil d'usure réglementaire.

Dans ce mode de réalisation, la couche radialement interne ne peut venir en contact avec le sol de roulage lorsque l'usure du pneumatique est inférieure à l'usure correspondant au seuil d'usure réglementaire. La couche radialement interne est, dans cette deuxième variante, généralement appelée sous-couche ou couche de support.

Généralement, la bande de roulement comprend des découpures séparant des blocs de sculpture les uns des autres, découpures au fond desquelles sont agencées des témoins d'usure. De tels témoins d'usure sont imposés, par exemple par les règlements des Nations Unies R30 et R54, des Etats-Unis d'Amérique FMVSS139 ou encore de la Chine GB97743 et visent à indiquer à l'utilisateur du pneumatique un seuil d'usure réglementaire du pneumatique au-delà duquel il est risqué de rouler, notamment sur sol mouillé. Ainsi, on qualifie ces témoins d'usure de témoins d'usure réglementaires. Chaque témoin d'usure réglementaire est formé par une protubérance s'étendant radialement depuis le fond de la découpure, notamment depuis le fond de la découpure la plus profonde, radialement vers l'extérieur sur une hauteur radiale sensiblement égale à 1,6 mm. Cette hauteur radiale permet de définir le potentiel d'usure du pneumatique, comme la hauteur radiale entre, lorsque le pneumatique est à l'état neuf, le point le plus radialement externe du témoin d'usure réglementaire et son projeté sur le sol lors du roulage du pneumatique.

Comme indiqué précédemment, les pneumatiques, en particulier pour véhicules de tourisme, comportent habituellement :
- deux bourrelets destinés à entrer en contact avec un support de montage;
- deux flancs prolongeant les bourrelets radialement vers l'extérieur et s'unissant dans un sommet comprenant une bande de roulement et une armature de sommet ;
- au moins une armature de carcasse s'étendant radialement dans chaque flanc et axialement dans le sommet, radialement intérieurement à l'armature de sommet.

L'invention sera mieux comprise à la lecture de la description qui va suivre, donnée uniquement à titre d'exemple non limitatif et faite en se référant aux dessins dans lesquels :
- la figure 1 est une vue, dans un plan de coupe méridien parallèle à l'axe de rotation du pneumatique, d'une première variante d'un premier mode de réalisation de l'invention,
- la figure 2 est une vue analogue à celle de la figure 1 d'une deuxième variante du premier mode de réalisation de l'invention,
- la figure 3 est une vue, dans un plan de coupe méridien parallèle à l'axe de rotation du pneumatique, d'une première variante d'un deuxième mode de réalisation de l'invention, et
- la figure 4 est une vue analogue à celle de la figure 3 d'une deuxième variante du deuxième mode de réalisation de l'invention.

Dans les figures relatives au pneumatique, on a représenté un repère X, Y, Z correspondant aux directions habituelles respectivement axiale (Y), radiale (Z) et circonférentielle (X) d'un pneumatique.

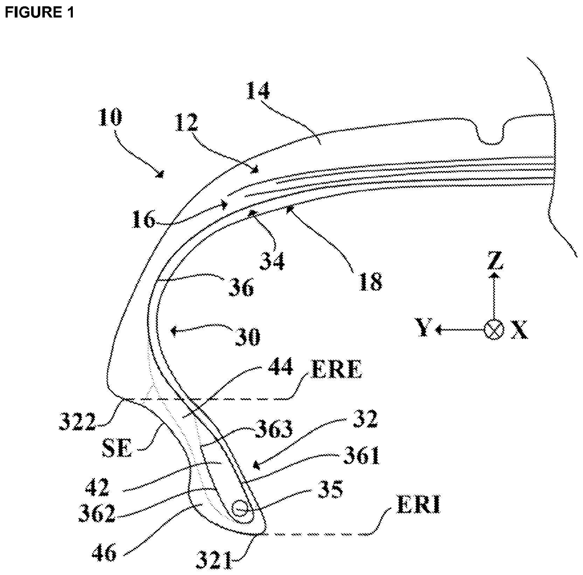

On a représenté sur la figure 1 un pneumatique, conforme à une première variante d'un premier mode de réalisation de l'invention et désigné par la référence générale 10. Le pneumatique 10 présente une forme sensiblement torique autour d'un axe de révolution sensiblement parallèle à la direction axiale Y. Le pneumatique 10 est destiné à un véhicule de tourisme.

Le pneumatique 10 comprend un sommet 12 comprenant une bande de roulement 14 destinée à entrer en contact avec un sol lors du roulage et une armature de sommet 16 s'étendant dans le sommet 12 selon la direction circonférentielle X. Le pneumatique 10 comprend également une couche interne d'étanchéité 18 à un gaz de gonflage étant destiné à délimiter une cavité interne avec un support de montage du pneumatique 10 une fois le pneumatique 10 monté sur le support de montage, par exemple une jante, cette cavité étant destinée à être mise sous pression par le gaz de gonflage.

Le pneumatique 10 comprend deux flancs 30 prolongeant le sommet 12 radialement vers l'intérieur. Le pneumatique 10 comporte en outre deux bourrelets 32 radialement intérieurs aux flancs 30. Chaque bourrelet 32 est destiné à entrer en contact avec un support de montage. Chaque flanc 30 relie chaque bourrelet 32 au sommet 12. Ainsi, les deux flancs 30 prolongeant les bourrelets 32 radialement vers l'extérieur et s'unissent dans le sommet 12. Chaque bourrelet 32 est délimité radialement à l'intérieur par le point 321 radialement le plus intérieur du pneumatique 1. Chaque bourrelet 32 est délimité radialement à l'extérieur par le point 322 de la surface externe SE du bourrelet 32 radialement le plus extérieur à être en contact avec une jante de mesure (non représentée) du pneumatique selon le manuel de la norme ETRTO (en anglais, « European Tyre and Rim Technical Organisation »), 2021 lorsque le pneumatique est gonflé à sa pression nominale sur cette jante de mesure. Le point 321 radialement le plus intérieur définit l'extrémité radialement intérieure ERI du bourrelet 32 et le point 322 définit l'extrémité radialement extérieure ERE du bourrelet 32.

Le pneumatique 10 comprend une armature de carcasse 34. L'armature de sommet 16 est agencée radialement entre la bande de roulement 14 et l'armature de carcasse 34. L'armature de carcasse 34 comprend au moins une couche de carcasse 36, ici une unique couche de carcasse 36, ancrée dans chaque bourrelet 32. La couche de carcasse 36 s'étend radialement dans chaque flanc 30 et axialement dans le sommet 12, radialement intérieurement à l'armature de sommet 16.

Aux fins d'ancrage de la couche de carcasse 36, la couche de carcasse 36 est ancrée dans chaque bourrelet 32 en formant un enroulement autour d'un élément de renforcement circonférentiel 35 de chaque bourrelet 32, ici une tringle, de sorte qu'une portion axialement intérieure 361 de la couche de carcasse 36 ancrée dans chaque bourrelet 32 est agencée axialement à l'intérieur d'une portion axialement extérieure 362 de la couche de carcasse 36 ancrée dans chaque bourrelet 32 et de sorte que chaque extrémité axiale 363 délimitant axialement la couche de carcasse 36 ancrée dans chaque bourrelet 32 soit agencée radialement à l'extérieur de chaque élément de renforcement circonférentiel 35.

Chaque bourrelet 32 comporte une première couche 42, dite de bourrage, s'étendant radialement vers l'extérieur depuis chaque élément de renforcement circonférentiel 35 et au contact de la couche de carcasse 36. La première couche 42 est agencée au moins en partie, entre la portion axialement intérieure 361 et la portion axialement extérieure 362.

Chaque bourrelet 32 comporte également une deuxième couche 44, agencée axialement à l'extérieur de la portion axialement extérieure 362 et de la première couche de bourrage 42.

Chaque bourrelet 32 comporte aussi une troisième couche 46, dite d'assise du pneumatique 10. La troisième couche d'assise 46 est destinée à être au contact du support de montage du pneumatique 10 lorsque le pneumatique est monté sur ce support de montage. La troisième couche d'assise 46 est agencée axialement à l'extérieur de l'élément de renforcement circonférentiel 35 et plus précisément axialement entre l'élément de renforcement circonférentiel 35 et le support de montage (non représenté) lorsque le pneumatique est monté sur ce support.

Au moins une des première, deuxième et troisième couches 42, 44, 46 comprend, de préférence est constituée par, une composition de caoutchouc conforme à l'invention. Dans l'exemple illustré, la première couche de bourrage 42 est constituée d'une composition de caoutchouc conforme à l'invention.

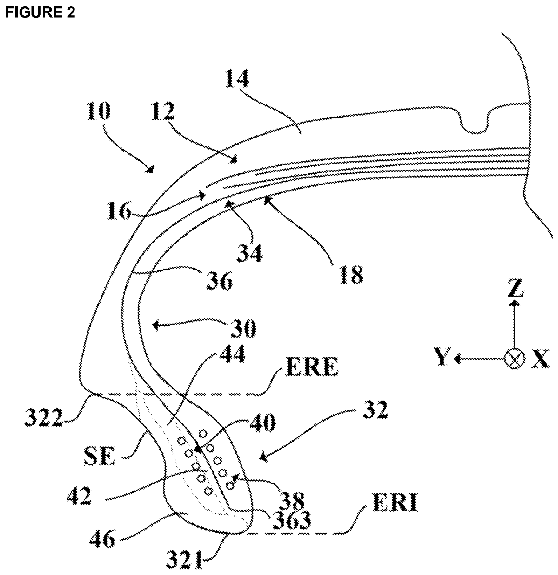

On a représenté sur la figure 2 un pneumatique selon une deuxième variante du premier mode de réalisation de l'invention. Les éléments analogues à ceux illustrés sur la figure 1 sont désignés par des références identiques.

A la différence du pneumatique selon le premier mode de réalisation, le pneumatique 10 selon la deuxième variante est tel que, aux fins d'ancrage de la couche de carcasse 36, le pneumatique 10 comprend un élément de renforcement circonférentiel axialement intérieur 38 agencé axialement à l'intérieur de la couche de carcasse 36 et un élément de renforcement circonférentiel axialement extérieur 40 agencé axialement à l'extérieur de la couche de carcasse 36. Ici chaque élément de renforcement 38, 40 comprend un élément de renforcement filaire continu enroulé sur plusieurs tours circonférentiels, par exemple comme cela est décrit dans WO 2021/123522.

Comme pour la première variante, au moins une des première, deuxième et troisième couches 42, 44, 46 comprend, de préférence est constituée par, une composition de caoutchouc conforme à l'invention. Dans l'exemple illustré, la première couche de bourrage 42 est constituée d'une composition de caoutchouc conforme à l'invention.

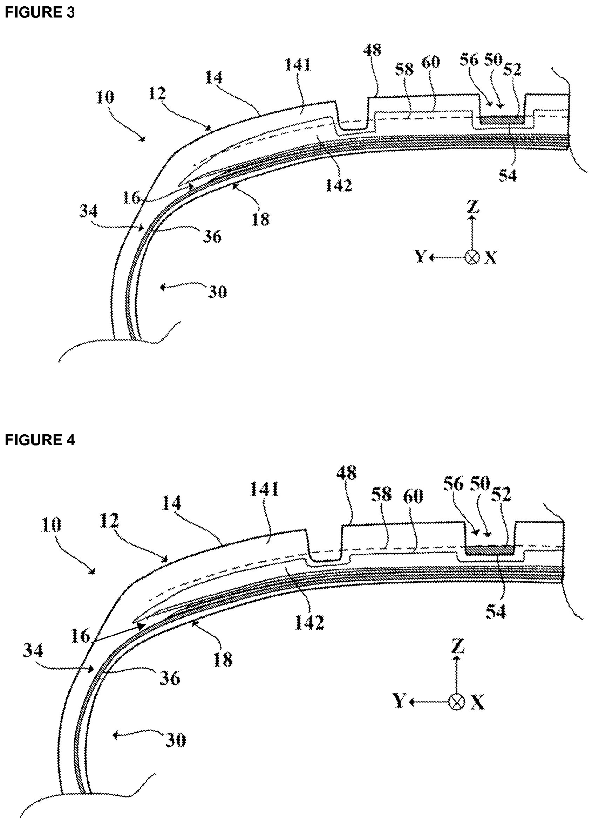

On a représenté sur la figure 3 un pneumatique selon une première variante d'un deuxième mode de réalisation de l'invention. Les éléments analogues à ceux illustrés sur les figures 1 et 2 sont désignés par des références identiques.

La bande de roulement 14 comprend une couche radialement externe 141 destinée à être en contact avec un sol de roulage du pneumatique lorsque le pneumatique est neuf et une couche radialement interne 142 agencée radialement à l'intérieur de la couche radialement externe 141 lorsque le pneumatique est neuf. Lorsque le pneumatique est neuf, la couche radialement externe porte ici une surface de roulement 48 du pneumatique 10 destinée à être en contact avec le sol.

La bande de roulement 14 comprend plusieurs témoins d'usure réglementaires 50 définissant un seuil d'usure réglementaire en-deçà duquel le pneumatique n'est plus conforme à la réglementation correspondante en termes d'usure. En l'espèce, le témoin d'usure réglementaire 50 comprend une protubérance 52 s'étendant radialement depuis un fond 54 d'une découpure 56 radialement vers l'extérieur sur une hauteur radiale allant de 1,45 mm à 1,75 mm et ici sensiblement égale à 1,6 mm. On définit, une trajectoire d'usure réglementaire 58 parallèle à la surface de roulement 48 du pneumatique 10 et passant par la surface radialement externe du ou des témoins d'usure réglementaires 50. Sur la figure 3, la trajectoire d'usure réglementaire 58 est représentée par une ligne en tirets. Comme cela est visible sur la figure 3, il existe un seuil prédéterminé d'usure de la bande de roulement 14 strictement inférieur au seuil d'usure réglementaire illustré par la trajectoire d'usure réglementaire 58, seuil prédéterminé au-delà duquel la couche radialement interne 142 est destinée à être en contact avec le sol du roulage du pneumatique 10. Sur la figure 3, ce seuil prédéterminé est illustré par l'interface 60 entre la couche radialement externe 141 et la couche radialement interne 142.

On a représenté sur la figure 4 un pneumatique selon une deuxième variante du deuxième mode de réalisation de l'invention. Les éléments analogues à ceux illustrés sur la figure 3 sont désignés par des références identiques.

A la différence de la première variante illustrée sur la figure 3, la couche radialement interne 142 est destinée à ne pas être en contact avec le sol du roulage du pneumatique 10 tant que l'usure de la bande de roulement 14 est inférieure ou égale au seuil d'usure réglementaire. Autrement dit, la couche radialement interne 142 est destinée à être en contact avec le sol du roulage du pneumatique 10 lorsque l'usure de la bande de roulement 14 atteint un seuil d'usure prédéterminé au-delà du seuil d'usure réglementaire. Sur la figure 4, ce seuil d'usure prédéterminé est illustré par l'interface 60 entre la couche radialement externe 141 et la couche radialement interne 142.

Le pneumatique selon l'invention est destiné à équiper des véhicules à moteur de type tourisme, SUV ("Sport Utility Vehicles"), ou deux roues (notamment motos), ou avions, ou encore des véhicules industriels choisis parmi camionnettes, « Poids-lourd », - c'est-à-dire métro, bus, engins de transport routier (camions, tracteurs, remorques), véhicules hors-la-route tels qu'engins agricoles ou de génie civil -, et autres. De manière préférée, le pneumatique selon l'invention est particulièrement adapté pour équiper les véhicules de type tourisme, camionnette et SUV.

Les exemples qui suivent sont donnés à titre illustratif. Ils ne doivent en aucun cas être considérés comme limitatifs de la présente invention.

### EXEMPLES

### Méthode de mesure

### Propriétés dynamiques

Les propriétés dynamiques sont mesurées sur un viscoanalyseur (Metravib VA4000), selon la norme ASTM D 5992-96. On enregistre la réponse d'un échantillon de la composition vulcanisée (éprouvettes cylindriques de 4 mm d'épaisseur et de 400 mm² de section), soumis à une sollicitation sinusoïdale en cisaillement simple alterné, à la fréquence de10Hz, à une température de 40°C.

Pour les mesures du facteur de perte tan(delta), on effectue un balayage en amplitude de déformation de 0,1% à 10% crête-crête (cycle aller), puis de 10% à 0,1% crête-crête (cycle retour).

Plus la valeur de tan(delta) à 40°C est faible, plus l'hystérèse de la composition sera faible et donc plus la résistance au roulement sera faible. Les résultats sont exprimés en termes de performance base 100, c'est-à-dire que la valeur 100 est attribuée arbitrairement au témoin, pour ensuite comparer le tan(delta) à 40°C (c'est-à-dire l'hystérèse - et donc la résistance au roulement) des différentes solutions testées. La valeur en base 100 est calculée selon l'opération : (valeur de tan(delta) à 40°C du témoin/valeur de tan(delta) à 40°C de l'échantillon)*100. Ainsi, une valeur inférieure représente une diminution des performances d'hystérèse (c'est-à-dire une augmentation de l'hystérèse), tandis qu'une valeur supérieure représente une meilleure performance d'hystérèse (c'est-à-dire une hystérésis inférieure).

### Mesures de traction

Les essais ont été effectués conformément à la norme française NF T 46-002 de septembre 1988. Toutes les mesures de traction ont été effectuées dans les conditions normales de température (23±2°C) et d'hygrométrie (50±5% d'humidité relative), selon la norme française NF T 40-101 (décembre 1979).

On a mesuré en seconde élongation (c'est-à-dire après accommodation) le module sécant nominal calculé en se ramenant à la section initiale de l'éprouvette (ou contrainte apparente, en MPa) à 10% d'allongement noté MA₁₀ (module d'élasticité sous tension à 10% d'allongement), sur des échantillons cuits 15 minutes à 160°C. Les résultats sont exprimés en base 100 par rapport à la composition témoin. Lorsque la valeur est supérieure à 100, la composition présente un module MA₁₀, et donc une rigidité, plus élevé que la composition témoin.

### Plasticité Mooney

La mesure de plasticité Mooney se fait selon le principe suivant et conformément à la norme ASTM D-1646. La composition, généralement cru, est moulé dans une enceinte cylindrique chauffée à une température donnée, usuellement 100°C. Après une minute de préchauffage, un rotor de type L tourne au sein de l'éprouvette à 2 tours par minute et on mesure le couple utile pour entretenir ce mouvement après 4 minutes de rotation. La plasticité Mooney (ML 1+4) est exprimée en "unité Mooney" (UM, avec 1 UM = 0,83 Newton.mètre). De manière bien connue de l'homme du métier, plus la plasticité Mooney est faible, plus le matériau est facile à travailler. Toutes les valeurs sont indiquées en base 100 par rapport au témoin donné.

### Fixation

Le temps de fixation des mélanges est déterminé d'après la norme ISO 289-2 de février 2016, avec les écarts suivants par rapport à la norme : le temps retenu comme mesure de la fixation est décompté à partir de la mise en rotation du rotor sans tenir compte du temps de moulage ; on ne mesure que **t₅** quelque soit le rotor.

Ainsi, le temps de fixation (Fixation 115°C t₅) est le temps nécessaire (en minutes) hors minute de préchauffage à partir de la mise en rotation du rotor (2tr/min), pour obtenir une remontée du couple Mooney de 5 unités par rapport à sa valeur minimale, et ce quel que soit le rotor utilisé. Cette mesure est réalisée à 115°.

Les résultats sont exprimés en base 100 par rapport à la composition témoin.

### Préparation des compositions

Les compositions sont fabriquées dans des mélangeurs appropriés, en utilisant deux phases de préparation successives bien connues de l'homme du métier: une première phase de travail ou malaxage thermo-mécanique (parfois qualifiée de phase "non-productive") à haute température, jusqu'à une température maximale comprise entre 110°C et 200°C, de préférence entre 130°C et 180°C, suivie d'une deuxième phase de travail mécanique (parfois qualifiée de phase "productive") à plus basse température, typiquement inférieure à 110°C, par exemple entre 60°C et 100°C, phase de finition au cours de laquelle est classiquement incorporé le système de réticulation ou vulcanisation.

La cuisson des compositions est réalisée à 160°C pendant 15 min.

### Essais

Les formulations des compositions préparées sont décrites dans le tableau 1 (composants et teneur - sauf indications contraires, les teneurs sont exprimées en pce). On mesure pour chaque composition à cru, c'est-à-dire avant vulcanisation, la valeur de plasticité Mooney. On mesure ensuite à cuit, donc après vulcanisation, le module d'élasticité sous tension à 10% d'allongement (MA10) et le facteur de perte tan(delta).

| | **C1** | **C2** | **INV1** |
|---|---|---|---|
| NR (1) | 100 | 100 | 100 |
| Noir de carbone (2) | 70 | - | 24 |
| Noir de carbone de pyrolyse (3) | - | 87 | 58 |
| Antioxydant (5) | 2,5 | 2,5 | 2,5 |
| Résine renforçante (6) | 5,5 | 7,2 | 7,2 |
| Résine renforçante (7) | 6 | 7,8 | 7,8 |
| Acide stéarique | 2 | 2 | 2 |
| Oxyde de zinc | 3 | 3 | 3 |
| Soufre | 3 | 3,3 | 3,3 |
| Accélérateur (8) | 2 | 2,2 | 2,2 |
| Durcisseur (9) | 2,4 | 3,1 | 3,1 |
| **MA₁₀ (base 100)** | 100 | 71 | 98 |
| **Fixation 115°C t₅ (base 100)** | 100 | 140 | 113 |
| **Mooney (base 100)** | 100 | 106 | 102 |
| **tan(delta) 40°C (base 100)** | 100 | 99 | 97 |

**Tableau 1 : formulation et propriétés des compositions C1, C2 et INV1**

| | |
|---|---|
| (1) | Caoutchouc naturel |
| (2) | Noir de carbone conventionnel N326 |
| (3) | Noir de carbone de pyrolyse « P550 » de la société Scandinavian Enviro Systems (cendres (%) : 18.5 ; soufre (%) : 3 ; zinc (%) : 4,5 ; surface spécifique STSA : 56 m²/g (ASTM D6556-2021); volume de vide à 50MPa : 44ml/100g (ASTM D7854-21)) |
| (5) | ((N-(1,3-dimethylbutyl)-N-phenyl-para-phenylenediamine ("Santoflex 6-PPD" de Flexsys) |
| (6) | Résine phénolique à base d'hydroxybenzène « Durez 28391 » de la société Sumitomo |
| (7) | Résine phénolique à base de cardanol « Durez 12686 » de la société Sumitomo |
| (8) | N-cyclohexyl-2-benzothiazyl-sulfénamide de la société Flexsys |
| (9) | Hexaméthylènetétranamine de la société Ineos Paraform |

On note que les compositions conformes à l'invention (INV1) permettent, avec un mélange de noir de carbone conventionnel et de noir de carbone de pyrolyse, d'obtenir une rigidité similaire à la composition témoin (composition C1) et une meilleure résistance au roulement (tan(delta)). Les compositions conformes à la présente invention présentent par ailleurs une processabilité satisfaisante (viscosité Mooney similaire à la composition témoin). Les compositions de la présente invention présentent donc un bon compromis rigidité/résistance au roulement/processsabilité tout en incorporant une teneur plus élevée en matière recyclée et biosourcée.

### Teneur en résines renforçantes

Les formulations des compositions préparées sont décrites dans le tableau 2 (composants et teneur - sauf indications contraires, les teneurs sont exprimées en pce). On mesure pour chaque composition à cru, c'est-à-dire avant vulcanisation, la valeur de plasticité Mooney. On mesure ensuite à cuit, donc après vulcanisation, le module d'élasticité sous tension à 10% d'allongement (MA₁₀) et le facteur de perte tan(delta).

| | **C3** | **INV2** |
|---|---|---|
| NR (1) | 100 | 100 |
| Noir de carbone (2) | 24 | 24 |
| Noir de carbone de pyrolyse (3) | 58 | 58 |
| Antioxydant (5) | 2.5 | 2,5 |
| Résine renforçante (6) | 18 | 6,6 |
| Résine renforçante (7) | - | 7,2 |
| Acide stéarique | 2 | 2 |
| Oxyde de zinc | 3 | 3 |
| Soufre | 3,3 | 3,3 |
| Accélérateur (8) | 2,2 | 2,2 |
| Durcisseur (9) | 3,7 | 2,8 |
| **MA₁₀ (base 100)** | 100 | 108 |
| **Fixation 115°C t₅ (base 100)** | 100 | 118 |
| **Mooney (base 100)** | 100 | 98 |
| **tan(delta) 40°C (base 100)** | 100 | 99 |

**Tableau 2 : formulation et propriétés des compositions C3 et INV2**

| | |
|---|---|
| (1) | Caoutchouc naturel |
| (2) | Noir de carbone conventionnel N326 |
| (3) | Noir de carbone de pyrolyse « P550 » de la société Scandinavian Enviro Systems (cendres (%) : 18.5 ; soufre (%) : 3 ; zinc (%) : 4,5 ; surface spécifique |
| | STSA : 56 m²/g (ASTM D6556-2021); volume de vide à 50MPa : 44ml/100g (ASTM D7854-21)) |
| (5) | ((N-(1,3-dimethylbutyl)-N-phenyl-para-phenylenediamine ("Santoflex 6-PPD" de Flexsys) |
| (6) | Résine phénolique à base d'hydroxybenzène « Durez 28391 » de la société Sumitomo |
| (7) | Résine phénolique à base de cardanol « Durez 12686 » de la société Sumitomo |
| (8) | N-cyclohexyl-2-benzothiazyl-sulfénamide de la société Flexsys |
| (9) | Hexaméthylènetétranamine de la société Ineos Paraform |

Il est observé que l'utilisation d'un coupage de résines renforçantes permet de réduire la quantité totale de résines de renforçantes utilisées dans les compositions de caoutchouc (comparaison des compositions C3 et INV2). En effet, la composition C3 comprenant 18 pce d'une résine phénolique à base d'hydroxybenzène présente une rigidité inférieure à celle d'une composition utile dans le cadre de la présente invention qui présente une teneur totale en résines renforçantes de 13,8 pce.

Une rigidité similaire à celle des compositions de la présente invention ne pourrait être obtenue pour des compositions comprenant à titre de charges renforçantes un mélange de noir de carbone et de noir de carbone de pyrolyse qu'en utilisant des teneurs en résine (6) - employée seule- bien supérieure à la teneur totale en résines renforçantes utilisées dans les compositions de la présente invention (comparaison C3 et INV2).

## Revendications

1. Pneumatique (10) comprenant deux bourrelets (32), au moins un des bourrelets (32) comprenant une composition de caoutchouc à base de :
- une matrice élastomère comprenant majoritairement en masse du caoutchouc naturel ;
- au moins 65 pce de charges renforçantes, les charges renforçantes étant constituées de 40 à 70 pce de noir de carbone de pyrolyse et de 10 à 40 pce de noir de carbone, le ratio (masse de noir de carbone de pyrolyse)/(masse totale des charges renforçantes) allant de 0,60 à 0,75 ;
- 10 à 20 pce d'un mélange de résines renforçantes, le mélange de résines renforçantes comprenant une résine phénolique à base de cardanol, le ratio (masse de résine phénolique à base de cardanol)/(masse totale de de résines renforçantes) allant de 0,1 à 0,7,
- un durcisseur ; et
- un système de réticulation.

2. Pneumatique (10) selon la revendication 1, dans lequel le ratio (masse de résine phénolique à base de cardanol)/(masse totale de de résines renforçantes) va de 0,2 à 0,6 ; plus préférentiellement de 0,4 à 0,6.

3. Pneumatique (10) selon la revendication 1 ou 2 comprenant :
- une armature de carcasse (34) comprenant au moins une couche de carcasse (36) ancrée dans chaque bourrelet (32), et
- une couche d'assise (46) du pneumatique (10) destinée à être au contact d'un support de montage du pneumatique (10) lorsque le pneumatique (10) est monté sur le support de montage,
le ou chaque bourrelet (32) comprend au moins une couche intermédiaire (42, 44) agencée axialement entre la couche de carcasse (36) ancrée dans ledit bourrelet (32) et la couche d'assise (46), la couche intermédiaire (42, 44) comprenant la composition de caoutchouc, de préférence étant constituée de la composition de caoutchouc.

4. Pneumatique (10) selon la revendication 3, dans lequel la couche de carcasse (36) ancrée dans chaque bourrelet (32) forme un enroulement autour d'un élément de renforcement circonférentiel (35) de chaque bourrelet (32) de sorte qu'une portion axialement intérieure (361) de la couche de carcasse (36) ancrée dans chaque bourrelet (32) est agencée axialement à l'intérieur d'une portion axialement extérieure (362) de la couche de carcasse (36) ancrée dans chaque bourrelet (32), la couche intermédiaire (42, 44) comprend une couche, dite de bourrage, s'étendant radialement vers l'extérieur depuis chaque élément de renforcement circonférentiel (35) et agencée au moins en partie, entre la portion axialement intérieure (361) et la portion axialement extérieure (362).

5. Pneumatique (10) selon la revendication 3, dans lequel, chaque bourrelet (32) comprenant un élément de renforcement circonférentiel axialement intérieur (38) agencé axialement à l'intérieur de la couche de carcasse (36) ancrée dans chaque bourrelet (32) et un élément de renforcement circonférentiel axialement extérieur (40) agencé axialement à l'extérieur de la couche de carcasse (36) ancrée dans chaque bourrelet (32), la couche intermédiaire (42, 44) comprend une couche, dite de bourrage, s'étendant axialement entre la couche d'assise (46) et l'élément de renforcement axialement extérieur (40).

6. Pneumatique (10) comprenant une bande de roulement (14) comprenant :
- une couche radialement externe (141) destinée à être en contact avec un sol de roulage du pneumatique (10) lorsque le pneumatique (10) est neuf, et
- une couche radialement interne (142) agencée radialement à l'intérieur de la couche radialement externe (141) lorsque le pneumatique (10) est neuf,
la couche radialement interne (142) comprenant une composition de caoutchouc à base de :
- une matrice élastomère comprenant majoritairement en masse du caoutchouc naturel ;
- au moins 65 pce de charges renforçantes, les charges renforçantes étant constituées de 40 à 70 pce de noir de carbone de pyrolyse et de 10 à 40 pce de noir de carbone, le ratio (masse de noir de carbone de pyrolyse)/(masse totale des charges renforçantes) allant de 0,60 à 0,75 ;
- 10 à 20 pce d'un mélange de résines renforçantes, le mélange de résines renforçantes comprenant une résine phénolique à base de cardanol, le ratio (masse de résine phénolique à base de cardanol)/(masse totale de de résines renforçantes) allant de 0,1 à 0,7 ;
- un durcisseur ; et
- un système de réticulation.

7. Pneumatique (10) selon la revendication 6, dans lequel dans lequel le ratio (masse de résine phénolique à base de cardanol)/(masse totale de de résines renforçantes) va de 0,2 à 0,6 ; plus préférentiellement de 0,4 à 0,6.

8. Pneumatique (10) selon la revendication 6 ou 7, comprenant un indicateur d'usure réglementaire (50) délimitant un seuil d'usure réglementaire de la bande de roulement (14), et un seuil prédéterminé d'usure de la bande de roulement (14) strictement inférieur au seuil d'usure réglementaire, seuil prédéterminé au-delà duquel la couche radialement interne (142) est destinée à être en contact avec le sol du roulage du pneumatique (10).

9. Pneumatique (10) selon la revendication 6 ou 7, comprenant un indicateur d'usure réglementaire (50) délimitant un seuil d'usure réglementaire de la bande de roulement (14), la couche radialement interne (142) est destinée à ne pas être en contact avec le sol du roulage du pneumatique (10) tant que l'usure de la bande de roulement (14) est inférieure ou égale au seuil d'usure réglementaire.

10. Pneumatique (10) selon l'une quelconque des revendications précédentes dans lequel la matrice élastomère comprend de 50 à 100 pce, de préférence de 75 à 100 pce, de caoutchouc naturel.

11. Pneumatique (10) selon l'une quelconque des revendications précédentes dans lequel la matrice élastomère comprend en outre un copolymère de butadiène-styrène (SBR).

12. Pneumatique (10) selon l'une quelconque des revendications précédentes dans lequel le mélange de résines renforçantes comprend une résine phénolique à base de cardanol et au moins une autre résine renforçante choisie parmi les résines phénoliques, les résines époxydes, les résines benzoxazines, les résines polyuréthanes et les résines aminoplastes.

13. Pneumatique (10) selon l'une quelconque des revendications précédentes dans lequel le mélange de résines renforçantes est constitué d'une résine phénolique à base de cardanol et d'une autre résine phénolique, de préférence une autre résine phénolique à base d'hydroxybenzène.

14. Pneumatique (10) selon l'une quelconque des revendications précédentes dans lequel le système de réticulation est un système de vulcanisation à base de soufre moléculaire et/ou d'un agent donneur de soufre, de préférence le système de réticulation comprend entre 0.5 et 12 pce de soufre, de préférence entre 3 et 9 pce.

15. Pneumatique (10) selon l'une quelconque des revendications précédentes dans lequel le noir de carbone de pyrolyse présente une teneur en cendres allant de 5 à 30 % en poids, de préférence de 8 à 25% en poids, par rapport au poids total du noir de carbone de pyrolyse.

16. Pneumatique (10) selon l'une quelconque des revendications précédentes dans lequel le noir de carbone de pyrolyse présente une teneur en soufre supérieure à 2% en poids, de préférence allant de 2,5 à 5% en poids, par rapport au poids total du noir de carbone de pyrolyse.

17. Pneumatique (10) selon l'une quelconque des revendications précédentes dans lequel la composition comprend en outre un ou plusieurs agents sélectionné(s) dans le groupe constitué des plastifiants, des charges non renforçantes, des pigments, des agents de protection tels que cires anti-ozone, anti-ozonants chimiques, anti-oxydants et des agents anti-fatigues.

## Patentansprüche

1. Reifen (10), der zwei Wülste (32) umfasst, wobei mindestens eine der Wülste (32) eine Kautschukzusammensetzung auf folgender Basis umfasst:
- eine Elastomermatrix, die massebezogen hauptsächlich Naturkautschuk umfasst;
- mindestens 65 phr verstärkende Füllstoffe, wobei die verstärkenden Füllstoffe aus 40 bis 70 phr Pyrolyseruß und 10 bis 40 phr Ruß bestehen, wobei das Verhältnis (Masse Pyrolyseruß)/(Gesamtmasse verstärkende Füllstoffe) von 0,60 bis 0,75 reicht;
- 10 bis 20 phr einer Mischung aus verstärkenden Harzen, wobei die Mischung aus verstärkenden Harzen ein Phenolharz auf Basis von Cardanol umfasst, wobei das Verhältnis (Masse Phenolharz auf Basis von Cardanol)/(Gesamtmasse verstärkende Harze) von 0,1 bis 0,7 reicht,
- ein Härter und
- ein Vernetzungssystem.

2. Reifen (10) nach Anspruch 1, wobei das Verhältnis (Masse Phenolharz auf Basis von Cardanol)/(Gesamtmasse verstärkende Harze) von 0,2 bis 0,6; weiter bevorzugt von 0,4 bis 0,6 reicht.

3. Reifen (10) nach Anspruch 1 oder 2, umfassend:
- eine Karkassenverstärkung (34), die mindestens eine Karkassenlage (36) umfasst, die in jeder Wulst (32) verankert ist, und
- eine Auflageschicht (46) des Reifens (10), die dazu bestimmt ist, mit einem Montageträger des Reifens (10) in Kontakt zu sein, wenn der Reifen (10) auf dem Montageträger montiert ist,
wobei die oder jede Wulst (32) mindestens eine Zwischenschicht (42, 44) umfasst, die axial zwischen der Karkassenlage (36), die in der Wulst (32) verankert ist, und der Auflageschicht (46) angeordnet ist, wobei die Zwischenschicht (42, 44) die Kautschukzusammensetzung umfasst, vorzugsweise aus der Kautschukzusammensetzung besteht.

4. Reifen (10) nach Anspruch 3, wobei die Karkassenlage (36), die in jeder Wulst (32) verankert ist, derart um ein Umfangsverstärkungselement (35) jeder Wulst (32) herum gewickelt ist, dass ein axial innenliegender Abschnitt (361) der Karkassenlage (36), die in jeder Wulst (32) verankert ist, axial innerhalb eines axial außenliegenden Abschnitts (362) der Karkassenlage (36), die in jeder Wulst (32) verankert ist, angeordnet ist, die Zwischenschicht (42, 44) eine als Wulstlage bezeichnete Lage umfasst, die sich von jedem Umfangsverstärkungselement (35) aus radial nach außen erstreckt und zumindest teilweise zwischen dem axial innenliegenden Abschnitt (361) und dem axial außenliegenden Abschnitt (362) angeordnet ist.

5. Reifen (10) nach Anspruch 3, wobei jede Wulst (32) ein axial innenliegendes Umfangsverstärkungselement (38), das axial innerhalb der Karkassenlage (36) angeordnet ist, die in jeder Wulst (32) verankert ist, und ein axial außenliegendes Umfangsverstärkungselement (40) umfasst, das axial außerhalb der Karkassenlage (36) angeordnet ist, die in jeder Wulst (32) verankert ist, wobei die Zwischenschicht (42, 44) eine als Wulstlage bezeichnete Lage umfasst, die sich zwischen der Auflageschicht (46) und dem axial außenliegenden Verstärkungselement (40) axial erstreckt.

6. Reifen (10), der einen Laufstreifen (14) umfasst, umfassend:
- eine radial außenliegende Schicht (141), die dafür bestimmt ist, mit einem Rollboden des Reifens (10) in Kontakt zu sein, wenn der Reifen (10) neu ist, und
- eine radial innenliegende Schicht (142), die radial innerhalb der radial außenliegenden Schicht (141) angeordnet ist, wenn der Reifen (10) neu ist,
wobei die radial innenliegende Schicht (142) eine Kautschukzusammensetzung auf folgender Basis umfasst:
- eine Elastomermatrix, die massebezogen hauptsächlich Naturkautschuk umfasst;
- mindestens 65 phr verstärkende Füllstoffe, wobei die verstärkenden Füllstoffe aus 40 bis 70 phr Pyrolyseruß und 10 bis 40 phr Ruß bestehen, wobei das Verhältnis (Masse Pyrolyseruß)/(Gesamtmasse verstärkende Füllstoffe) von 0,60 bis 0,75 reicht;
- 10 bis 20 phr einer Mischung aus verstärkenden Harzen, wobei die Mischung aus verstärkenden Harzen ein Phenolharz auf Basis von Cardanol umfasst, wobei das Verhältnis (Masse Phenolharz auf Basis von Cardanol)/(Gesamtmasse verstärkende Harze) von 0,1 bis 0,7 reicht,
- ein Härter und
- ein Vernetzungssystem.

7. Reifen (10) nach Anspruch 6, wobei das Verhältnis (Masse Phenolharz auf Basis von Cardanol)/(Gesamtmasse verstärkende Harze) von 0,2 bis 0,6; weiter bevorzugt von 0,4 bis 0,6 reicht.

8. Reifen (10) nach Anspruch 6 oder 7, der einen vorschriftsmäßigen Verschleißanzeiger (50) umfasst, der eine vorschriftsmäßige Verschleißschwelle des Laufstreifens (14) definiert, und eine vorbestimmte Verschleißschwelle des Laufstreifens (14) strikt unter der vorschriftsmäßigen Verschleißschwelle, wobei die radial innenliegende Schicht (142) oberhalb der vorbestimmten Schwelle dazu bestimmt ist, mit dem Rollboden des Reifens (10) in Kontakt zu sein.

9. Reifen (10) nach Anspruch 6 oder 7, der einen vorschriftsmäßigen Verschleißanzeiger (50) umfasst, der eine vorschriftsmäßige Verschleißschwelle des Laufstreifens (14) definiert, wobei die radial innenliegende Schicht (142) dazu bestimmt ist, nicht mit dem Rollboden des Reifens (10) in Kontakt zu sein, solange der Verschleiß des Laufstreifens (14) unterhalb oder bei der vorschriftsmäßigen Verschleißschwelle liegt.

10. Reifen (10) nach einem der vorhergehenden Ansprüche, wobei die Elastomermatrix 50 bis 100 phr, vorzugsweise 75 bis 100 phr Naturkautschuk umfasst.

11. Reifen (10) nach einem der vorhergehenden Ansprüche, wobei die Elastomermatrix ferner ein Butadien-StyrolCopolymer (SBR) umfasst.

12. Reifen (10) nach einem der vorhergehenden Ansprüche, wobei die Mischung aus verstärkenden Harzen ein Phenolharz auf Basis von Cardanol und mindestens ein weiteres verstärkendes Harz umfasst, das ausgewählt ist aus Phenolharzen, Epoxidharzen, Bezoxazinharzen, Polyurethanharzen und Aminoplasten.

13. Reifen (10) nach einem der vorhergehenden Ansprüche, wobei die Mischung aus verstärkenden Harzen aus einem Phenolharz auf Basis von Cardanol und einem weiteren Phenolharz besteht, vorzugsweise einem weiteren Phenolharz auf Basis von Hydroxybenzol.

14. Reifen (10) nach einem der vorhergehenden Ansprüche, wobei das Vernetzungssystem ein Vulkanisationssystem aus Basis von molekularem Schwefel und/oder eines Schwefelspenders ist, wobei das Vernetzungssystem vorzugsweise zwischen 0,5 und 12 phr, vorzugsweise zwischen 3 und 9 phr Schwefel umfasst.

15. Reifen (10) nach einem der vorhergehenden Ansprüche, wobei der Pyrolyseruß bezogen auf das Gesamtgewicht des Pyrolyserußes einen Aschegehalt von 5 Gew.-% bis 30 Gew.-%, vorzugsweise von 8 Gew.-% bis 25 Gew.-% aufweist.

16. Reifen (10) nach einem der vorhergehenden Ansprüche, wobei der Pyrolyseruß bezogen auf das Gesamtgewicht des Pyrolyserußes einen Schwefelgehalt von über 2 Gew.-%, vorzugsweise von 2,5 Gew.-% bis 5 Gew.-% aufweist.

17. Reifen (10) nach einem der vorhergehenden Ansprüche, wobei die Zusammensetzung ferner ein oder mehrere Mittel umfasst, das bzw. die aus der Gruppe ausgewählt ist bzw. sind, die aus Weichmachern, nicht verstärkenden Füllstoffen, Pigmenten, Schutzmitteln wie Antiozonwachsen, chemischen Ozonschutzmitteln, Antioxidantien und Ermüdungsschutzmitteln besteht.

## Claims

1. Tyre (10) comprising two beads (32), at least one of the beads (32) comprising a rubber composition based on:
- an elastomeric matrix comprising predominantly, by mass, natural rubber;
- at least 65 phr of reinforcing fillers, the reinforcing fillers consisting of 40 to 70 phr of pyrolysis carbon black and 10 to 40 phr of carbon black, the ratio (mass of pyrolysis carbon black)/(total mass of reinforcing fillers) ranging from 0.60 to 0.75;
- 10 to 20 phr of a mixture of reinforcing resins, the mixture of reinforcing resins comprising a cardanol-based phenolic resin, the ratio (mass of cardanol-based phenolic resin)/(total mass of reinforcing resins) ranging from 0.1 to 0.7;
- a curing agent; and
- a crosslinking system.

2. Tyre (10) according to Claim 1, in which the ratio (mass of cardanol-based phenolic resin)/(total mass of reinforcing resins) ranges from 0.2 to 0.6, more preferentially from 0.4 to 0.6.

3. Tyre (10) according to Claim 1 or 2, comprising:
- a carcass reinforcement (34) comprising at least one carcass layer (36) anchored in each bead (32), and
- a tyre (10) seating layer (46) intended to be in contact with a tyre (10) mounting support when the tyre (10) is mounted on the mounting support,
the or each bead (32) comprises at least one intermediate layer (42, 44) arranged axially between the carcass layer (36) anchored in said bead (32) and the seating layer (46), the intermediate layer (42, 44) comprising the rubber composition, preferably consisting of the rubber composition.

4. Tyre (10) according to Claim 3, in which the carcass layer (36) anchored in each bead (32) is wound around a circumferential reinforcing element (35) of each bead (32), so that an axially interior portion (361) of the carcass layer (36) anchored in each bead (32) is arranged axially to the inside of an axially exterior portion (362) of the carcass layer (36) anchored in each bead (32), the intermediate layer (42, 44) comprises a layer, known as a filling layer, extending radially outwards from each circumferential reinforcing element (35) and arranged, at least in part, between the axially inner portion (361) and the axially outer portion (362).

5. Tyre (10) according to Claim 3, in which each bead (32) comprises an axially inner circumferential reinforcing element (38) arranged axially inside the carcass layer (36) anchored in each bead (32) and an axially outer circumferential reinforcing element (40) arranged axially outside the carcass layer (36) anchored in each bead (32), the intermediate layer (42, 44) comprises a layer, known as a filling layer, extending axially between the seating layer (46) and the axially outer reinforcing element (40).

6. Tyre (10) comprising a tread (14) comprising:
- a radially outer layer (141) intended to be in contact with a ground on which the tyre (10) runs when the tyre (10) is new, and
- a radially inner layer (142) arranged radially inside the radially outer layer (141) when the tyre (10) is new,
the radially inner layer (142) comprising a rubber composition based on:
- an elastomeric matrix comprising predominantly, by mass, natural rubber;
- at least 65 phr of reinforcing fillers, the reinforcing fillers consisting of 40 to 70 phr of pyrolysis carbon black and 10 to 40 phr of carbon black, the ratio (mass of pyrolysis carbon black)/(total mass of reinforcing fillers) ranging from 0.60 to 0.75;
- 10 to 20 phr of a mixture of reinforcing resins, the mixture of reinforcing resins comprising a cardanol-based phenolic resin, the ratio (mass of cardanol-based phenolic resin)/(total mass of reinforcing resins) ranging from 0.1 to 0.7;
- a curing agent; and
- a crosslinking system.

7. Tyre (10) according to Claim 6, in which the ratio (mass of cardanol-based phenolic resin)/(total mass of reinforcing resins) ranges from 0.2 to 0.6, more preferentially from 0.4 to 0.6.

8. Tyre (10) according to Claim 6 or 7, comprising a regulatory wear indicator (50) delimiting a regulatory wear threshold of the tread (14), and a predetermined wear threshold of the tread (14) which is strictly less than the regulatory wear threshold, beyond which predetermined threshold the radially inner layer (142) is intended to be in contact with the ground on which the tyre (10) runs.

9. Tyre (10) according to Claim 6 or 7, comprising a regulatory wear indicator (50) delimiting a regulatory wear threshold of the tread (14), the radially inner layer (142) is intended not to come into contact with the ground on which the tyre (10) runs as long as the wear of the tread (14) is less than or equal to the regulatory wear threshold.

10. Tyre (10) according to any one of the preceding claims, in which the elastomeric matrix comprises from 50 to 100 phr, preferably from 75 to 100 phr, of natural rubber.

11. Tyre (10) according to any one of the preceding claims, in which the elastomeric matrix further comprises a styrene-butadiene copolymer (SBR).

12. Tyre (10) according to any one of the preceding claims, in which the reinforcing resin mixture comprises a cardanol-based phenolic resin and at least one other reinforcing resin chosen from phenolic resins, epoxy resins, benzoxazine resins, polyurethane resins and aminoplast resins.

13. Tyre (10) according to any one of the preceding claims, in which the reinforcing resin mixture consists of a cardanol-based phenolic resin and another phenolic resin, preferably another hydroxybenzene-based phenolic resin.

14. Tyre (10) according to any one of the preceding claims, in which the crosslinking system is a vulcanization system based on elemental sulfur and/or a sulfur-donor agent; preferably, the crosslinking system comprises between 0.5 and 12 phr of sulfur, preferably between 3 and 9 phr.

15. Tyre (10) according to any one of the preceding claims, in which the pyrolysis carbon black has an ash content ranging from 5% to 30% by weight, preferably from 8% to 25% by weight, relative to the total weight of the pyrolysis carbon black.

16. Tyre (10) according to any one of the preceding claims, in which the pyrolysis carbon black has a sulfur content of greater than 2% by weight, preferably ranging from 2.5% to 5% by weight, relative to the total weight of the pyrolysis carbon black.

17. Tyre (10) according to any one of the preceding claims, in which the composition also comprises one or more agents chosen from the group consisting of plasticizers, non-reinforcing fillers, pigments, protective agents such as anti-ozone waxes, chemical anti-ozonants, antioxidants and anti-fatigue agents.
